# EUROPÄISCHE PATENTANMELDUNG

(11) **EP 1 946 950 A1**
(43) Veröffentlichungstag der Anmeldung: **23.07.2008**
(21) Anmeldenummer: 08000539.0
(22) Anmeldetag: 14.01.2008
(51) Int. Cl.: B60H 1/00

(54) **Gehäuse, insbesondere für eine Kraftfahrzeug-Klimaanlage**

(30) Priorität: 18.01.2007 DE 102007003658
(71) Anmelder: Behr GmbH & Co. KG, 70469 Stuttgart (DE)
(72) Erfinder: Schmitz, Jochen, 51381 Leverkusen (DE); Wolf, Walter, 71570 Oppenweiler-Zell (DE)

(57) **Zusammenfassung**

Die Erfindung betrifft ein Gehäuse, insbesondere für eine Kraftfahrzeug-Klimaanlage (1), mit mindestens einer Anbindungsmöglichkeit für eine Anbindung des Gehäuses an mindestens einen Querträger (6), wobei mindestens eine mit dem Querträger (6) verbindbare Strebe (10) vorgesehen ist, die durch einen versteift ausgebildeten Wandbereich des Gehäuses gebildet ist, und/oder in einem Wandbereich des Gehäuses oder direkt benachbart eines Wandbereichs des Gehäuses verlaufend angeordnet ist.

## Beschreibung

Die Erfindung betrifft ein Gehäuse, insbesondere für eine Kraftfahrzeug-Klimaanlage, gemäß dem Oberbegriff des Anspruches 1.

Das Gehäuse einer Kraftfahrzeug-Klimaanlage ist in der Regel in der Nähe eines Querträgers angeordnet, der zur Bildung eines Montagemoduls dient, und an demselben befestigt. Der Querträger hat üblicherweise eine Abstützung zum Fahrzeugboden oder zum Fahrzeugtunnel in der Mitte des Fahrzeugbodens, wobei die Abstützung durch eine Strebe gebildet sein kann. Die Abstützung erhöht unter anderem die Crashsicherheit des Fahrzeugs und beeinflusst die Eigenfrequenz des Querträgers samt hieran angebrachter Bauteile. Eine derartige Anordnung lässt noch Wünsche in Bezug auf den Bauraum und die Montage offen.

Es ist Aufgabe der Erfindung, ein verbessertes Gehäuse für eine Kraftfahrzeug-Klimaanlage zur Verfügung zu stellen.

Diese Aufgabe wird gelöst durch ein Gehäuse, insbesondere für eine Kraftfahrzeug-Klimaanlage, mit den Merkmalen des Anspruchs 1. Vorteilhafte Ausgestaltungen sind Gegenstand der Unteransprüche.

Die Erfindung betrifft ein Gehäuse, insbesondere für eine Kraftfahrzeug-Klimaanlage, mit mindestens einer Anbindungsmöglichkeit für eine Anbindung des Gehäuses an mindestens einen Querträger, wobei mindestens eine mit dem Querträger verbindbare Strebe vorgesehen ist, die durch einen versteift ausgebildeten Wandbereich des Gehäuses gebildet ist, und/oder in einem Wandbereich des Gehäuses oder direkt benachbart eines Wandbereichs des Gehäuses verlaufend angeordnet ist. Erfindungsgemäß erfolgt hierbei eine Integration der Stützfunktion zwischen Querträger (mit/oder ohne integrierte Luftführung) und Fahrzeugtunnel, dem Boden und/oder einem anderen, zweiten Querträger direkt über den Gehäusebereich der Kraftfahrzeug-Klimaanlage, insbesondere direkt über die Mittelwand und/oder mindestens eine der Seitenwände, wodurch der freie Bauraum in der Nähe des Gehäuses vergrößert werden kann. Eine derartige Ausgestaltung ermöglicht zudem eine Vereinfachung der Montage, da nicht mehr das Gehäuse und abstützende Streben an den Querträgern fixiert werden müssen, so dass sich die Zahl der am Querträger zu fixierenden Bauteile verringert. Ferner verkürzt sich der Kraftfluss in Richtung Boden in Bezug auf die zu übertragenden Kräfte der im Gehäuse angeordneten Klimaanlage. Der Verlauf der Strebe kann sowohl im Wesentlichen gerade als auch gekrümmt sein, wobei eine einfache Anpassung der Strebe an den Bauraum und die Belastungen möglich ist.

Eine erfindungsgemäße Ausgestaltung des Gehäuses ist insbesondere für Kraftfahrzeug-Klimaanlagengehäuse geeignet, jedoch kann sie entsprechend auch für andere an einem Querträger anzubringende Gehäuse verwendet werden, bei denen der Querträger selbst mittels Streben an weiteren Elementen abgestützt werde muss. Durch die Integration der Abstützfunktion, also mindestens einer Strebe, in das Gehäuse ergibt sich insbesondere ein Bauraumgewinn.

Die Strebe oder der strebenartig ausgebildete, versteifte Wandbereich, auf dem im Folgenden der Einfachheit halber auch als Strebe Bezug genommen wird, verläuft vorzugsweise durch eine Mittelwand des Gehäuses und/oder ist direkt durch die Mittelwand des Gehäuses gebildet. Im Falle einer Integration in die Mittelwand verläuft die Strebe bevorzugt in Strömungsrichtung der Luft durch die Kraftfahrzeug-Klimaanlage gesehen nach Heizkörper und/oder einem Zuheizer, beispielsweise gebildet durch PTC-Elemente. Alternativ kann die Strebe direkt in der Trennwand zur Trennung der Klimazonen Rechts/Links, zwischen dem Verdampfer und dem Heizkörper, oberhalb der Klimaanlage in Richtung Stirnwand, vorbei am Verdampfer in Richtung Stirnwand oder Scheibenwurzel verlaufen. Kombinationen mehrerer Streben sind möglich, insbesondere bevorzugt von zentralen und seitlichen Streben.

Die Strebe verläuft vorzugsweise entlang oder in einer Außenwand des Gehäuses und/oder ist direkt durch einen entsprechenden, versteiften Bereich der Außenwand des Gehäuses gebildet, wobei ein ähnlicher (allerdings außermittig versetzter) Verlauf wie im Falle einer zentralen Strebe möglich ist. Die Strebe verläuft ausgehend vom Querträger, insbesondere bevorzugt, aber nicht notwendigerweise dem Cockpit-Querträger, beispielsweise zum Boden und/oder Tunnel und/oder zur Stirnwand und/oder zu einem weiteren Träger. Ferner ist eine Integration in die Seitenwände in Verbindung mit einer Verlängerung zur Aufnahme der Einbauten der Mittelkonsole möglich. Ebenfalls kann die Strebe auch in die Hinterwand (Wand in Richtung Innenraum) oder in das Oberteil des Gehäuse integriert sein oder an der- bzw. demselben entlang verlaufen.

Die äußere, seitliche Strebe kann im Inneren des Gehäuses an der Seitenwand, integriert in die Seitenwand oder außerhalb der Seitenwand des Gehäuses verlaufend angeordnet sein, wobei die Strebe auch einstückig mit dem Gehäuse ausgebildet sein kann. Dabei kann sie bevorzugt in Strömungsrichtung der Luft durch die Kraftfahrzeug-Klimaanlage gesehen nach dem Heizkörper und/oder Zuheizer, beispielsweise durch PTC-Elemente gebildet, angeordnet sein. Alternativ - oder in Verbindung hiermit oder einer der folgenden Verläufe - kann sie zwischen dem Verdampfer und dem Heizkörper, oberhalb der Klimaanlage in Richtung Stirnwand, vorbei am Verdampfer in Richtung Stirnwand oder Scheibenwurzel verlaufen. Bei der Anordnung ist die Position der abgehenden Rohre/Leitungen, der Aktuatoren und Kinematiken zu berücksichtigen. Die seitlichen Streben können auch seitlich der Einbauten der Mittelkonsole verlaufen, oder einen Verlauf hinter den Einbauten zwischen Einbauten Mittelkonsole und der Klimaanlage haben

Die Strebe verläuft sowohl im Falle einer Integration in die Mittelwand als auch im Falle einer Integration in die Seitenwand ausgehend vom Querträger, an dem die Klimaanlage und die Instrumententafel etc. angebracht sind, in Richtung Tunnel und/oder Fahrzeugboden oder in Richtung Stirnwand und/oder Scheibenwurzel.

Es können mehrere Streben vorgesehen sein, insbesondere eine zentrale Strebe in Verbindung mit mindestens einer seitlichen Strebe, bevorzugt ist jedoch eine einzige Strebe vorgesehen. Entsprechend ist ein oder sind mehrere Lastpfade vorgesehen, die insbesondere durch die Streben gebildet sind.

Ein strebenartig versteift ausgebildeter Wandbereich des Gehäuses weist vorzugsweise einen mehrschichtigen Aufbau über zumindest einen Teil seines Querschnitts auf, wobei der Querschnitt gegenüber benachbarten, nicht versteift ausgebildeten Wandbereichen des Gehäuses vergrößert ist. Alternativ können Öffnungen für das Durchführen einer Strebe im Gehäuse vorgesehen sein.

Eine Strebe oder ein versteift ausgebildeter Wandbereich des Gehäuses weist vorzugsweise einen Querschnitt quer zur Kraftflussrichtung von 50 bis 150 mm², insbesondere von 100 mm² +/- 20 mm², auf. Hierbei hängt der Querschnitt zudem von der Festigkeit und Belastbarkeit des Materials ab, d.h. eine umspritzte Stahlstrebe weist bei gleicher zu erwartender Belastung einen geringeren Querschnitt als ein aus einem Glasfasermaterial gebildeter Bereich auf.

Die Materialdicke im versteift ausgebildeten Wandbereich beträgt bevorzugt 1 bis 5 mm.

Die Strebe weist vorzugsweise ein flaches, insbesondere rechteckiges oder abgerundet rechteckiges, ein offenes Hohlprofil (z.B. C-, U, W-, Hut-Profil) oder ein geschlossenes Hohlprofil (z.B. Rundrohr, Rechteckrohr) auf. Das Profil kann ggf. auch aus mehreren Teilprofilen zusammengesetzt sein (z.B. zwei C-Profile, die zu einem geschlossenen Hohlprofil zusammengesetzt sind), Im Falle eines C-Profils beträgt die Schenkelhöhe vorzugsweise 5 bis 10 mm, der Abstand der Schenkel beträgt vorzugsweise 20 bis 60 mm.

Die Strebe ist vorzugsweise ganz oder zumindest teilweise durch ein Metall gebildet, insbesondere Stahl, Aluminium. Ferner sind Verbundmaterialien oder faserverstärkte Kunststoffe (langfaser-, endlosfaser-, matten-, gewebeverstärkte Kunststoffe, insbesondere unidirektionale Endlosfasern) besonders geeignet. Der Aufbau der Streben kann sowohl ein- als auch mehrlagig (Sandwich, Hybrid, etc.) sein.

Insbesondere bevorzugt ist die Strebe vom Material des umgebenden Gehäusebereichs umspritzt, insbesondere mittels eines Sandwich-Spritzgießverfahrens. Beliebige andere Herstellungsverfahren zur Herstellung eines Verbunds oder einer stabilen Anordnung sind möglich. Ebenfalls können Öffnungen im Gehäuse vorgesehen sein, in welche die Strebe eingeführt wird. Zum Abdichten kann beispielsweise ein Klebstoff verwendet werden, welcher zusätzlich der Fixierung der Strebe im Gehäuse dient.

Die Strebenoberfläche kann - je nach Material der Strebe oder der Anordnung derselben - mit einem Korrosionsschutzüberzug beschichtet sein, mit Schaumstoff zur akustischen und thermischen Isolationen überzogen sein, ein- oder beidseitig überspritzt sein, oder mechanisch mit dem Gehäuse verbunden sein.

Die Anbindung der Streben am Querträger bzw. von überstehenden, versteift ausgebildeten Bereichen des Gehäuses, welche die Funktion der Streben haben, erfolgt vorzugsweise mittels einer lösbaren Verbindung, um das Transportvolumen zu verringern und die Handhabung während der Montage und im Falle einer Reparatur zu vereinfachen. Insbesondere geeignet sind Schraubverbindungen. Die Anbindung oben erfolgt im Allgemeinen momentensteif, d.h. es sich in der Regel zwei Verbindungsstellen erforderlich. Eine dieser Verbindungsstellen kann auch als Einhänge oder Einrenkverbindung ausgebildet sein, so dass nur eine Schraube erforderlich ist.

Die erste Anbindungsstelle der Strebe befindet sich bevorzugt oben, direkt am Querträger, am Durchzug für einen Lufteintritt in den Querträger, an einem am Querträger ausgebildeten oder vorgesehenen Halter. Die zweite Anbindungsstelle der Strebe befindet sich vorzugsweise unten, auf oder seitlich am Tunnel, oder vom an der Stirnwand oder am Windtauf-Querträger. Wird die Strebe direkt durch einen versteift ausgebildeten Bereich des Gehäuses gebildet, so kann dieser Bereich in Richtung Anbindungsstellen über das Gehäuse vorstehend ausgebildet sein.

Alternativ zu einer mehr oder wenig gerade ausgebildeten Strebe mit entsprechendem Kraftfluss kann auch eine Y-förmige oder X-förmige Strebenausgestaltung vorgesehen sein. Die oberen Anbindungsstellen können in diesem Fall der Cockpit-Querträger und/oder ein oberer Querträger der Stirnwand, die unteren Anbindungsstellen der Fußboden, insbesondere im Bereich des Fahrzeugtunnels, und/oder ein unterer Querträger der Stirnwand sein. Bei entsprechender Ausgestaltung der Stirnwand kann auch dieselbe direkt als Anbindungsstelle verwendet werden.

Eine entsprechende Ausgestaltung ist, obwohl nicht näher beschrieben, auch für andere Module des Cockpit-Bereichs möglich, die am Querträger anzubringen sind.

Beim Querträger, an welchem das Gehäuse angebracht ist, handelt es sich bevorzugt um einen herkömmlichen Querträger, bspw. um einen aus geformten Halbschalen zusammengesetzten, einen aus einem Hohlprofil gebogenen Querträger oder um einen auf sonstige Weise hergestellten Querträger, wobei auch eine Integration der Luftführung in den Querträger möglich ist, d.h. es besteht in diesem Fall mindestens eine Verbindungsöffnung zwischen dem Gehäuse und dem Querträger, um temperierte Luft von der Klimaanlage in den durch den Querträger oder in demselben verlaufenden Luftkanal einzuleiten. Ein Luftkanal kann jedoch auch außenseitig oder im Falle eines offenen Profils des Querträgers im vertieften Bereich desselben verlaufen.

Im Folgenden wird die Erfindung anhand von Ausführungsbeispielen, teilweise unter Bezugnahme auf die Zeichnung, im Einzelnen erläutert. Es zeigen:
- Fig. 1: einen Schnitt entlang der Mittellängsebene (Y=0) durch eine an einem Querträger angebrachte Klimaanlage mit in der Mittellängsebene angeordneter, versteifender Strebe,
- Fig.2: eine Fig. 1 entsprechende Darstellung mit zusätzlichem, schematisch angedeutetem Strebenverlauf über den Verdampfer zu einem weiteren Querträger,
- Fig.3: eine Fig. 1 entsprechende Darstellung einer Klimaanlage mit tragender Gehäuseseitenwand mit schematisch angedeutetem Strebenverlauf über den Verdampfer zu einem weiteren Querträger, wobei der ebenfalls angedeutete Strebenverlauf zum Tunnel entfällt,
- Fig.4: eine Fig. 1 entsprechende Darstellung einer Klimaanlage mit tragender Gehäuseseitenwand mit zwei zusätzlichen, schematisch angedeuteten Strebenverläufen,
- Fig. 5: eine Variante des Ausführungsbeispiels von Fig. 4,
- Fig. 6: eine Fig. 4 entsprechende Darstellung mit zwei weiteren, schematisch angedeuteten Strebenverläufen,
- Fig.7: eine Fig. 4 entsprechende Darstellung mit drei schematisch angedeuteten Strebenverläufen,
- Fig.8: eine Fig. 4 entsprechende Darstellung mit vier schematisch angedeuteten Strebenverläufen,
- Fig. 9: eine Variante der Klimaanlage von Fig. 1 mit tragender Gehäuseseitenwand, wobei das Gebläse mittig mit waagerecht verlaufender Drehachse angeordnet ist, mit vier schematisch angedeuteten möglichen Anordnungen von Strebenverläufen,
- Fig. 10: einen Schnitt entlang Linie XI-XI von Fig. 1, mit schematisch dargestellten Anordnungsmöglichkeiten für Streben,
- Fig. 11: einen Schnitt entlang Linie XI-XI von Fig. 1, mit schematisch angedeuteten Streben in der Gehäusemittelwand und an den Gehäuseseitenwänden,
- Fig. 12: eine perspektivische Darstellung eines entlang der Z-Ebene aufgeschnittenen Gehäuses einer Klimaanlage mit zwei seitlichen und einer zentralen Strebe,
- Fig. 13: eine andere perspektivische, zur Hälfte aufgeschnittene Darstellung der Klimaanlage von Fig. 12 zur Verdeutlichung der Lage der zentralen Strebe,
- Fig. 14: eine im Wesentlichen Fig. 13 entsprechende Ansicht der Klimaanlage unter Darstellung beider Hälften sowie des Gebläses,
- Fig. 15: eine Fig. 14 entsprechende Darstellung mit Querträger, wobei die Klimaanlage entlang der Querträgermitte aufgeschnitten ist,
- Fig. 16: eine Fig. 15 entsprechende Darstellung mit ganz dargestelltem Querträger,
- Fig. 17: eine Detailansicht des unteren Teils des Klimaanlagengehäuses,
- Fig. 18: eine Fig. 17 entsprechende Darstellung mit weiter oben liegendem Schnittverlauf,
- Fig. 19: eine Fig. 17 entsprechende Darstellung mit im Bereich des Querträgers liegend verlaufendem Schnittverlauf, und
- Fig. 20: eine Fig. 17 entsprechende Darstellung der gesamten Klimaanlage ohne Darstellung des Querträgers.

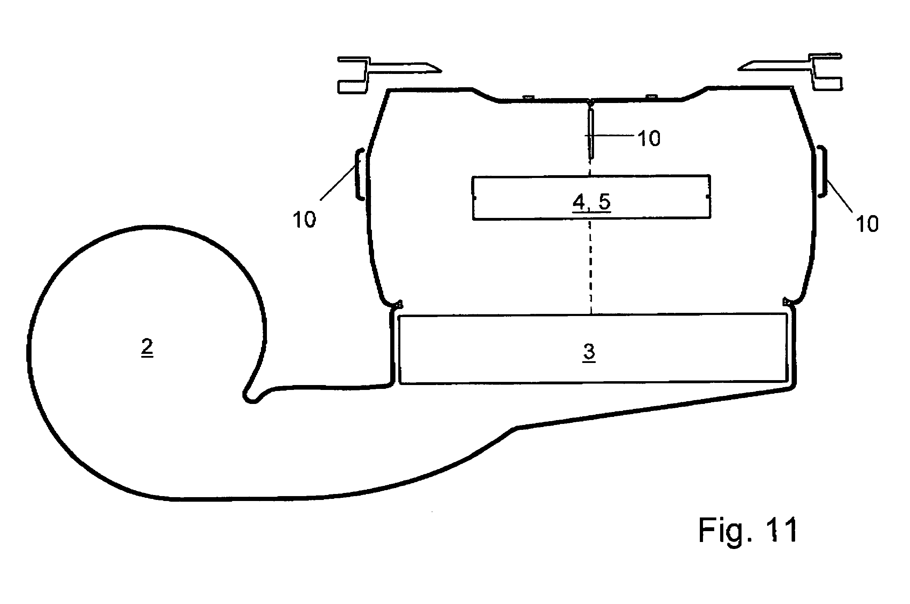

Gemäß den im Folgenden beschriebenen Ausführungsbeispielen ist jeweils - sofern nicht ausdrücklich anders beschrieben - eine Kraftfahrzeug-Klimaanlage 1 mit einem in einem mehrteiligen Gehäuse angeordneten Gebläse 2 (siehe Fig. 11), einem Verdampfer 3, einem Heizkörper 4 und einem nach dem Heizkörper 4 angeordneten PTC-Zuheizer 5 an einem Halter eines Querträgers 6 (vorliegend der Cockpit-Querträger) lösbar mittels Schrauben angebracht. Andere Anbringungen sind möglich. Beim Querträger 6 handelt es sich hierbei um einen durch eine geschweißte Stahlrohrkonstruktion gebildeten Querträger, der in seinem hohlen Innenraum mit Luftkanälen ausgebildet ist, über welche die von der Klimaanlage 1 kommende Luft auf Mittel- und Seitendüsen sowie zu den Öffnungen zum Entfrosten der Windschutzscheibe verteilt werden kann. Am Querträger 6 sind hierbei eine Mehrzahl von Haltern angeschweißt, welche beispielsweise der Anbringung des Gehäuses der Klimaanlage 1, der Mittelkonsole, eines Airbags und/oder der Lenkradsäule dienen. Die Ausgestaltung des Querträgers 6 ist jedoch nicht auf die dargestellte und beschriebene Ausgestaltung beschränkt. Beispielsweise kann der Querträger auch durch umgeformte halbschalenartige Bleche oder auf sonstige Weise hergestellte Querträger gebildet sein.

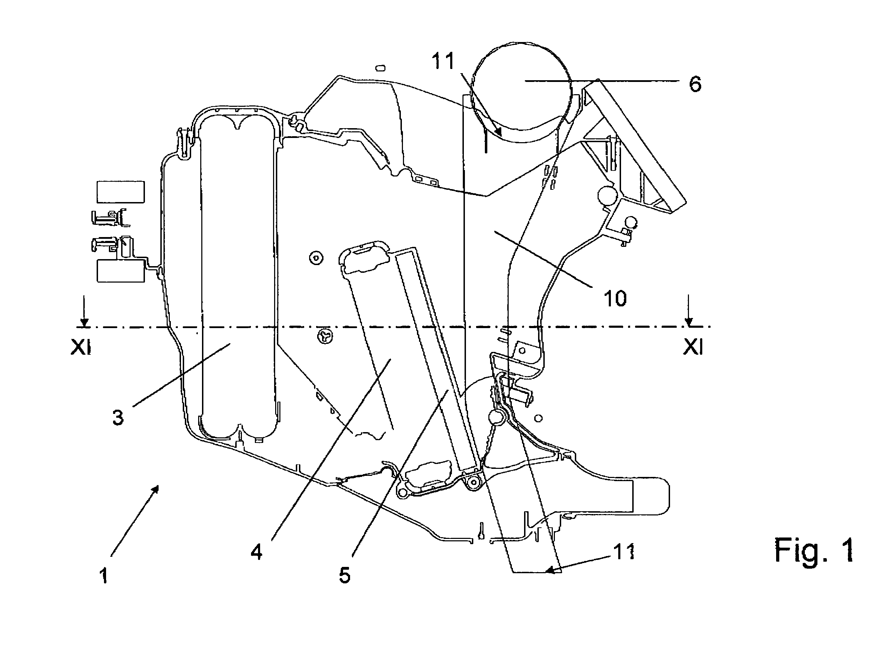

Gemäß dem in Fig. 1 und 11 dargestellten, ersten Ausführungsbeispiel ist integriert in das Gehäuse einer zweizonigen Klimaanlage 1 (rechts-links-Trennung) eine einzige, zentrale Strebe 10 vorgesehen, welche sowohl der Anbindung der Klimaanlage 1 am Querträger 6 als auch der Abstützung des Querträgers 6 gegenüber dem Fahrzeugboden (oder bei entsprechender Ausgestaltung des Fahrzeugbodens gegenüber dem Fahrzeugtunnel) dient, wobei auf die vorzugsweise lösbare und zumindest druckbelastbare Anbindung der Strebe 10 am Fahrzeugboden nicht näher eingegangen wird.

Die Strebe 10 verläuft in der Mittellängsebene des Kraftfahrzeugs, welche gleichzeitig die Gehäusemitte bildet, in Luftströmungsrichtung der die Klimaanlage durchströmenden Luft gesehen hinter dem Heizkörper 4 und Zuheizer 5. Zur Optimierung des Bauraums, beispielsweise für Einbauten in die Mittelkonsole (in Fig. 1 rechts angedeutet), ist die Strebe 10 leicht gekrümmt ausgebildet, wobei sie ausgehend vom oberhalb angeordneten Querträger 6 im oberen Bereich zuerst leicht entgegen der Fahrtrichtung des Fahrzeugs und im unteren Bereich parallel und direkt benachbart zur Endfläche des Zuheizers 5 verläuft. Die Anbindungsstellen, im Folgenden mit dem Bezugszeichen 11 versehen, liegen in horizontaler Richtung im Wesentlichen übereinander.

Ein Schnitt durch die Strebe 10 ist in Fig. 11 ersichtlich. Wie in Fig. 11 zudem mittels gestrichelter Linien zusätzlich dargestellt ist, kann die Strebe 10 gemäß einer Variante der Klimaanlage direkt in eine in der Mittellängsebene verlaufenden und der Aufteilung des Strömungsquerschnitts in einzelne Klimazonen dienenden Gehäusemittelwand integriert sein, wobei sie beispielsweise vom Material des Gehäuses über den Verlauf im Gehäuse hinweg umgeben ist, d.h. Gehäuse und Strebe sind einstückig ausgebildet.

Gemäß der Darstellung von Fig. 11 ist das Gebläse 2 seitlich versetzt bezüglich der Fahrzeugmittellängsebene mit vertikal verlaufender Drehachse angeordnet. Andere Anordnungen des Gebläses sind jedoch möglich, wie insbesondere eine zentrale Anordnung mit horizontaler Drehachse.

Die zentrale Strebe 10 ist vorliegend aus einem Stahlblech gestanzt und gebogen, wobei die Oberfläche mit einem Korrosionsschutzüberzug versehen ist. Sie weist einen U-förmig profilierten Querschnitt auf mit einer (Material-) Querschnittsfläche von 100mm², wobei die Materialstärke 2 mm, die Schenkelhöhe ca. 7 mm und der Abstand der Schenkel ca. 50 mm beträgt.

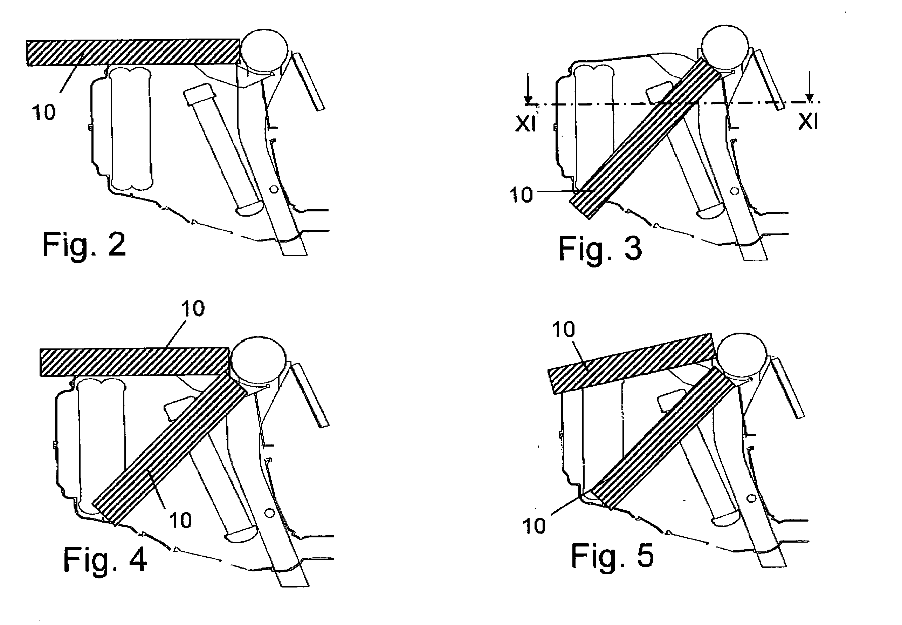

Fig. 2 zeigt ein zweites Ausführungsbeispiel, wobei zusätzlich zu einer zentralen Strebe 10, welche derjenigen des ersten Ausführungsbeispiels entspricht, eine zweite Strebe 10 vorgesehen ist. Diese zweite Strebe 10 verläuft ausgehend vom Querträger 6 entgegen der normalen Fahrtrichtung des Kraftfahrzeugs entlang der Mittellängsebene in im Wesentlichen horizontaler Richtung und hat ihre zweite Anbindungsstelle an einem zweiten, weiter vorne angeordneten Querträger (Windlauf).

Der Einfachheit halber wird im Folgenden auf Streben, die im Inneren der Klimaanlage verlaufen, d.h. bei entsprechender Klappenstellung bereichsweise im Luftstrom angeordnet sind, als zentrale Streben eingegangen. Streben, die im Bereich der Seitenwände des Gehäuses verlaufen, werden als seitliche Streben bezeichnet.

In Fig. 3 ist ein drittes Ausführungsbeispiel dargestellt, wobei - entgegen der Darstellung von Fig. 3 - die mittig angeordnete Strebe entfällt, dafür aber entlang den äußeren Seitenwänden des Gehäuses verlaufend angeordnet zwei seitliche Streben 10 vorgesehen sind (siehe Fig. 11), die ausgehend vorn Querträger 6 etwa in einem 45°-Winkel nach vorn entgegen der normalen Fahrtrichtung des Kraftfahrzeugs verlaufend, am oberen Bereich des Heizkörpers 4 und am unteren Bereich des Verdampfers 3 vorbei bis zu einem zweiten, weiter vorne angeordneten Querträger (Stirnwand) des Kraftfahrzeugs verläuft, an dem die zweite Anbindungsstelle für die Streben 10 angeordnet ist. Die seitlichen Streben weisen vorliegend einen C-förmigen Querschnitt auf, wobei die Gesamtquerschnittsfläche ca. 100 mm² beträgt. Die Streben 10 sind durch entsprechend ausgestanzte und gebogene Stahlbleche gebildet.

In Verbindung mit den seitlichen Streben 10 gemäß dem dritten Ausführungsbeispiel kann jedoch auch eine zentrale Strebe 10 vorgesehen sein, wie sie beispielsweise anhand des ersten Ausführungsbeispiels beschrieben ist. Natürlich können - insbesondere bei großen zu erwartenden Belastungen oder bei problematischen Strebenverläufen, welche zu einer Schwächung einzelner Streben führen - auch mehrere Streben vorgesehen sein.

Gemäß dem vierten, in Fig. 4 dargestellten Ausführungsbeispiel sind jeweils zwei Paare äußerer Streben 10 und zudem eine der Beschreibung des ersten Ausführungsbeispiels entsprechende in der Fahrzeugmittellängsebene verlaufende, zentrale Strebe 10 vorgesehen. Hierbei verläuft das erste seitliche Strebenpaar in horizontaler Richtung und das zweite Strebenpaar verläuft in einem 45°-Winkel nach unten entgegen der normalen Fahrtrichtung des Kraftfahrzeugs. Die beiden Strebenpaare enden an der Stirnwand.

Fig. 5 zeigt eine Variante des vierten Ausführungsbeispiels, wobei das obere Strebenpaar leicht schräg nach unten verlaufend angeordnet ist.

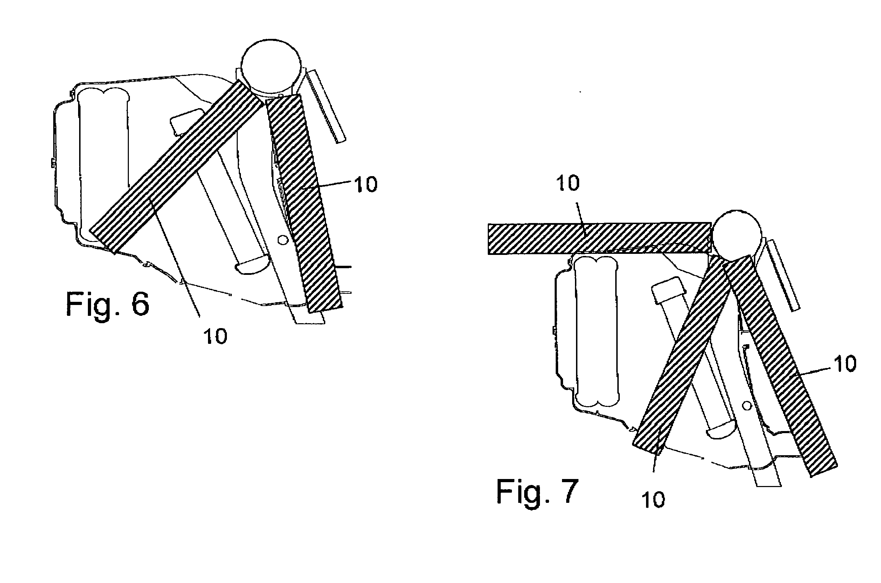

Fig. 6 zeigt ein fünftes Ausführungsbeispiel, gemäß dem sowohl die in der Mittellängsebene des Kraftfahrzeugs verlaufende, zentrale Strebe 10 als auch zwei Paare seitlicher Streben 10 vorgesehen sind. Hierbei verläuft das erste Strebenpaar in einem 45°-Winkel zur normalen Fahrtrichtung des Kraftfahrzeugs nach unten zum einem zweiten Querträger und das zweite Strebenpaar verläuft im Wesentlichen parallel zur zentralen Strebe 10. nach unten zum Fahrzeugboden.

Gemäß dem sechsten, in Fig. 7 dargestellten Ausführungsbeispiel sind drei Strebenpaare in Verbindung mit der zentralen Strebe 10 vorgesehen. Hierbei verläuft ein erstes Strebenpaar etwa horizontal in normaler Fahrtrichtung des Kraftfahrzeugs, wobei die Streben 10 an der Stirnwand enden, das zweite Strebenpaar verläuft in einem Winkel von ca. 75° zum ersten Strebenpaar nach unten, und das dritte Strebenpaar verläuft in einem Winkel von ca. 45° zum zweiten Strebenpaar, also leicht schräg nach hinten. Die unteren Enden der Streben 10 des zweiten und dritten Strebenpaares sind jeweils am Fahrzeugboden angebracht.

Bei den Figuren 4 bis 7 kann der ebenfalls angedeutete Strebenverlauf zum Tunnel wahlweise auch entfallen, ebenso wie die angedeutete Strebe in der Mittelebene. Ferner sind Kombinationen der dargestellten Möglichkeiten für den Strebenverlauf denkbar. Aus Gewichtsgründen kann man bei seitlichen Strebenverläufen auf eine Strebe in der Mittellängsebene verzichten und die Zahl der Streben minimal halten. So kann bei den Figuren 2 bis 11 wahlweise die eine oder andere Strebe entfallen. Ferner können beispielsweise nur die Streben auf der Seite zur Lenkung hin verstärkt ausgebildet sein. Die Gehäuseseite zur Beifahrerseite kann ohne Strebe, d.h. nur als Gehäusewand ohne (wesentliche) Kraftübertragungsfunktion für den Querträger, ausgebildet sein. Eine Abstützhalterung an dem Klimaanlagengehäuse kann in diesem Fall angespritzt sein, um die Verwendbarkeit des Gehäuses für andere Serien zu ermöglichen, oder auch entfallen.

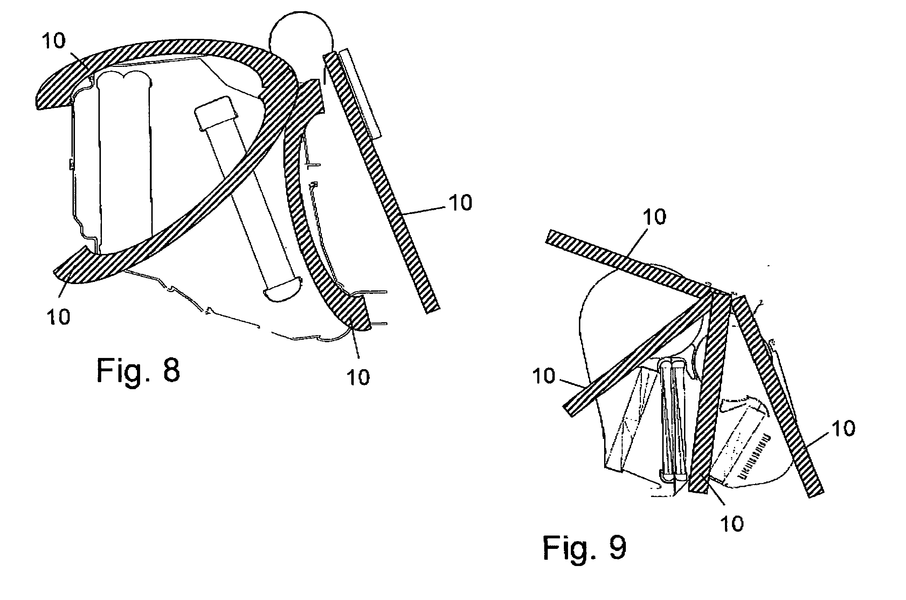

Fig. 8 zeigt schematisch ein Ausführungsbeispiel mit vier Strebenpaaren, wobei drei derselben gekrümmt ausgebildete Streben 10 aufweisen. Hierbei wird der Verdampfer von den ersten und zweiten Strebenpaaren im Wesentlichen von oben und unten her umgriffen. Diese Streben 10 enden ausgehend vom Querträger 6 jeweils an der Stirnwand. Das dritte und vierte Strebenpaar ist entgegen der normalen Fahrtrichtung des Kraftfahrzeugs nach hinten unten verlaufend angeordnet und stützt sich am Fahrzeugboden ab.

In Fig. 9 ist ein weiteres Ausführungsbeispiel dargestellt, wobei das Gebläse mit horizontal verlaufender Drehachse im Wesentlichen in der Mittellängsebene des Fahrzeugs angeordnet ist. Hierbei sind vier Strebenpaare vorgesehen, das erste Strebenpaar verläuft oberhalb des Gebläses, das zweite Strebenpaar verläuft zwischen Gebläse und Verdampfer, das dritte Strebenpaar verläuft nach dem Heizkörper, vorliegend im Wesentlichen in vertikaler Richtung, und das vierte Strebenpaar verläuft leicht schräg entgegen der normalen Fahrtrichtung des Kraftfahrzeugs nach hinten unten. Hierbei sind die Strebenpaare von der Seite betrachtet jeweils im Wesentlichen zwischen den einzelnen im Gehäuse vorgesehenen Einbauten, wie Gebläse, Verdampfer, Heizkörper, angeordnet.

Alternativ können statt der dargestellten vier Paare von Streben auch nur ein Strebenpaar oder eine Kombination aus den vier dargestellten Verläufen vorgesehen sein.

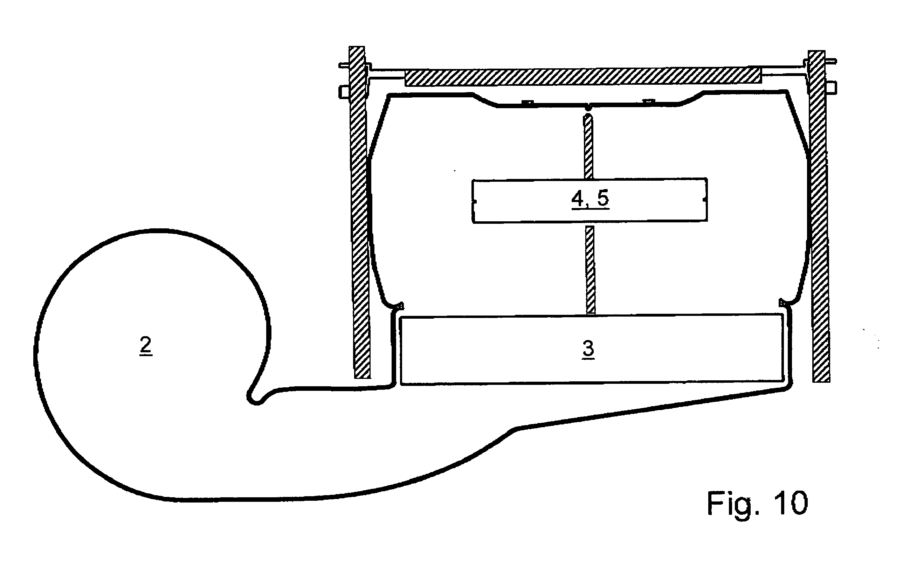

Fig. 10 zeigt eine schematische Darstellung der Bereiche (schraffiert dargestellt), in denen sinnvollerweise Streben angeordnet sein können. Wie aus Fig. 10 ersichtlich, können auch Streben vorgesehen sein, die sich parallel zur Breite des Heizkörpers am luftabströmseitigen Ende des Gehäuses erstrecken, so dass hinter diesen Streben ausreichend Bauraum für Einbauten in die dahinter angeordnete Mittelkonsole vorhanden ist.

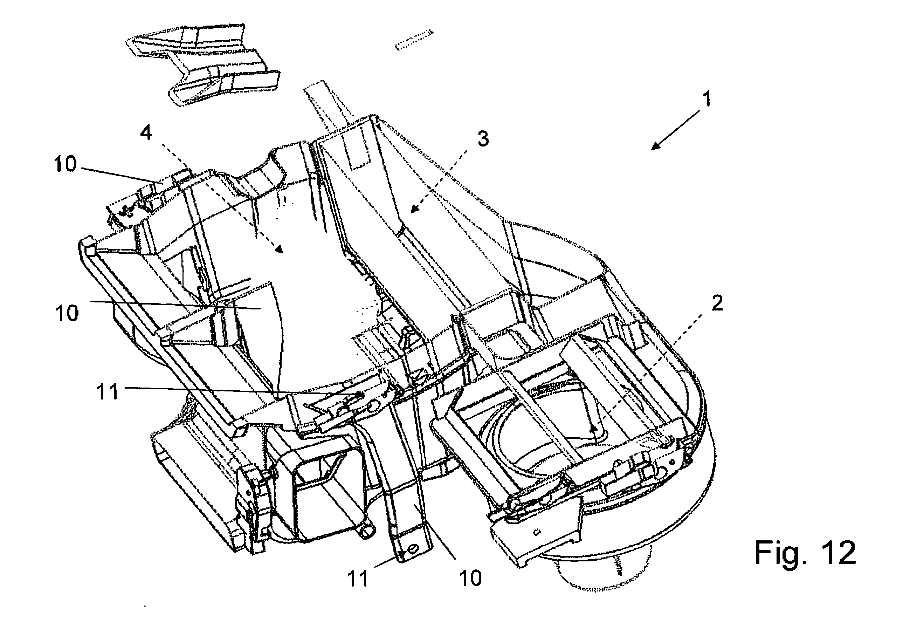

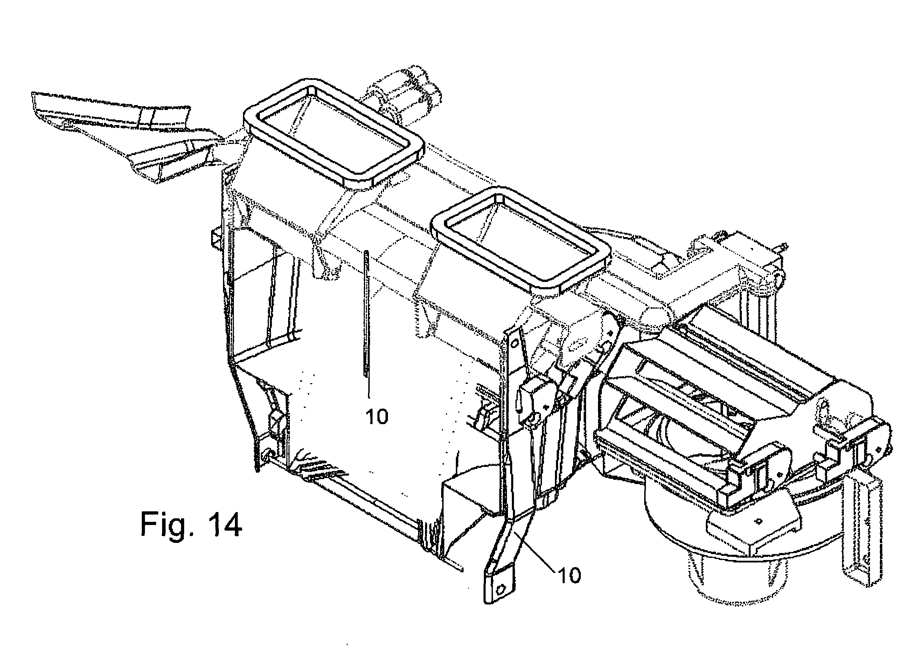

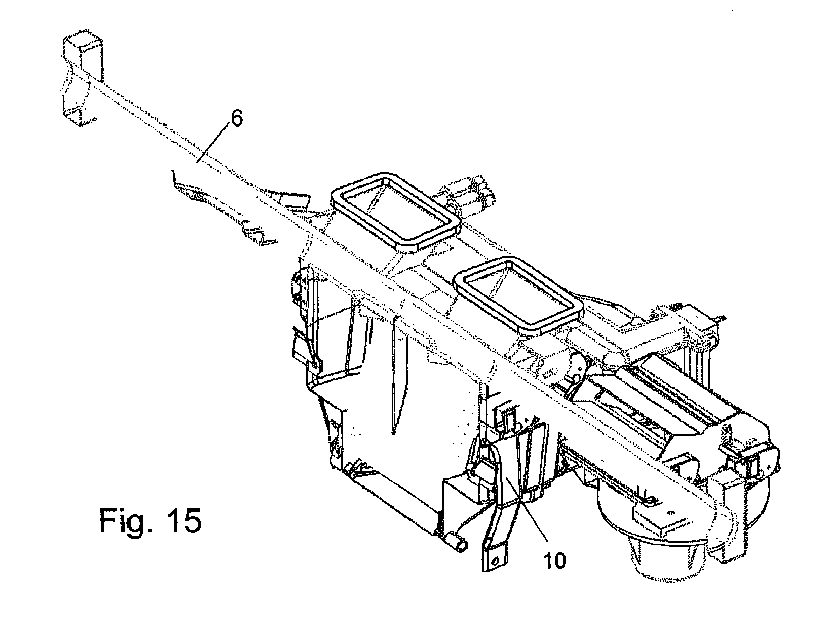

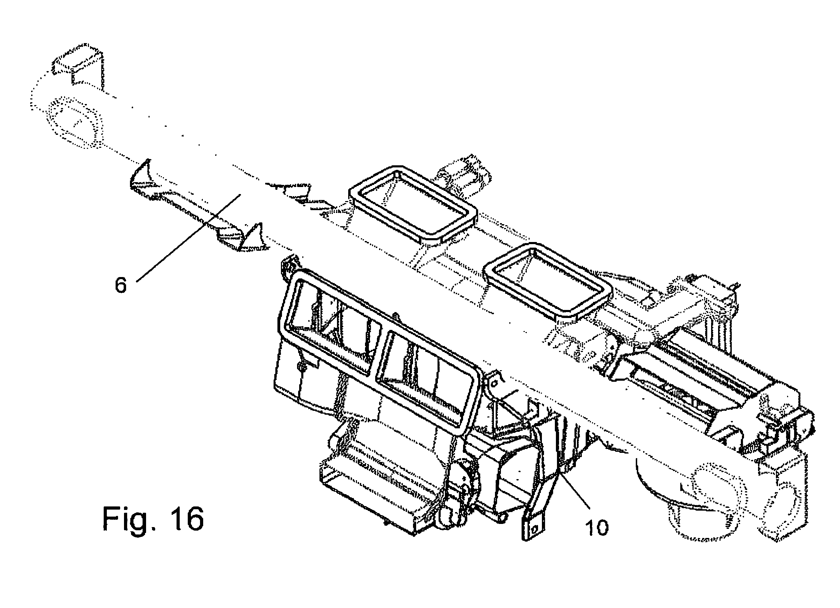

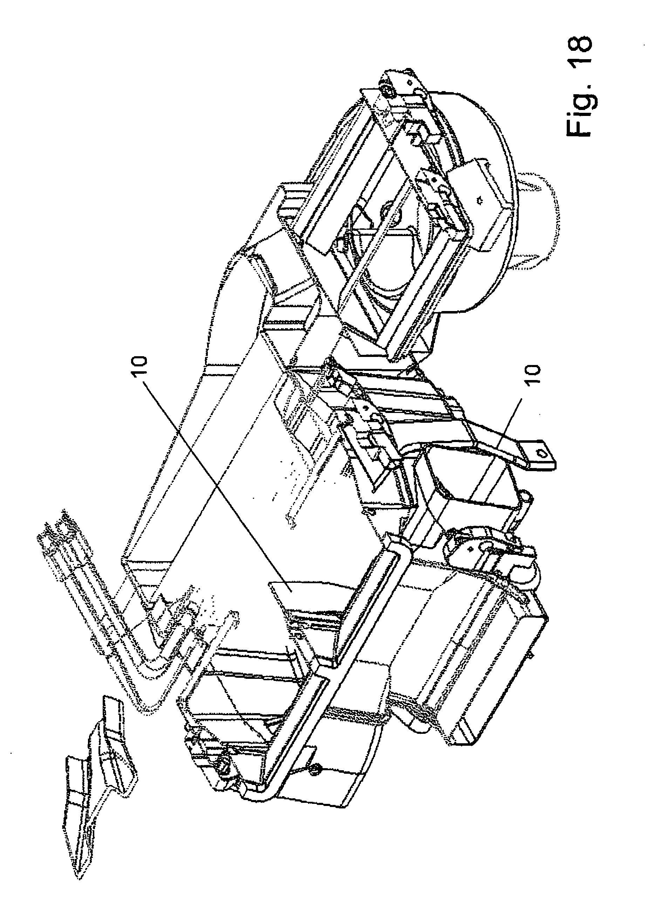

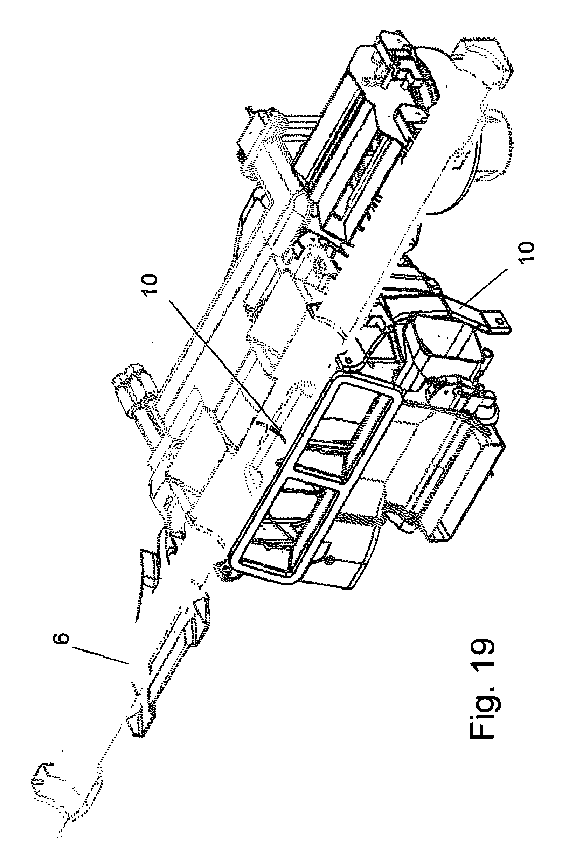

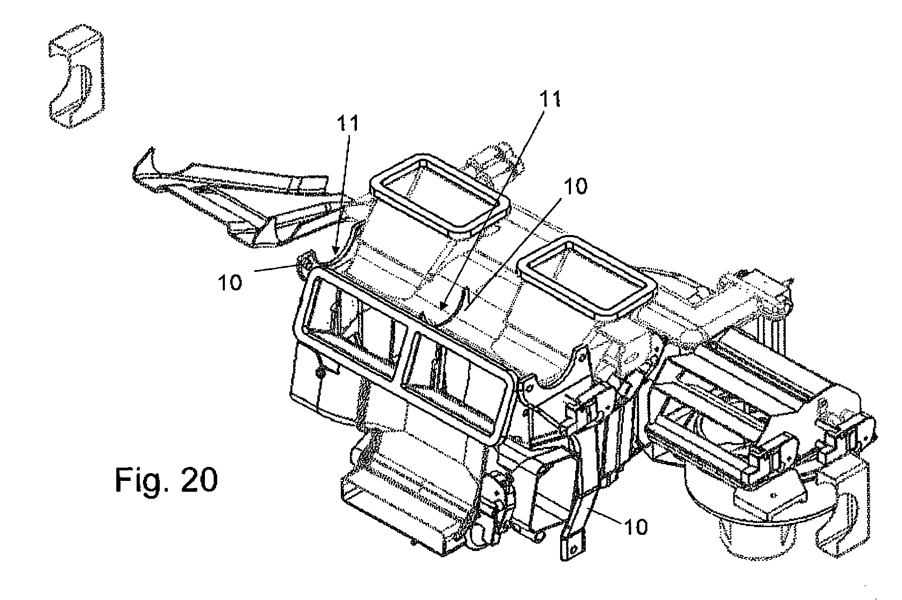

Die Figuren 12 bis 20 zeigen eine ein- oder zweizonige Kraftfahrzeug-Klimaanlage 1 mit einer zentralen und zwei seitlichen Streben 10, wobei in Fig. 12 zum besseren Verständnis die Stellen, an denen das Gebläse 2, der Verdampfer 3 und der Heizkörper 4 angeordnet sind, jeweils durch gestrichelte Pfeile und die entsprechenden Bezugszeichen angedeutet sind. Wie insbesondere aus Fig. 20 ersichtlich ist, enden die Streben 10 jeweils an ihrem oberen Ende mit einem Einschnitt, welcher die Kontur des Querträgers 6 im entsprechenden Anbindungsbereich 11 aufweist. Hierbei sind an den äußeren, seitlichen Streben 10 in jedem der einander gegenüberliegenden, den Querträger 6 zwischen sich aufnehmenden Schenkel Bohrungen zur Befestigung der Strebe 10 am Querträger 6 mit Hilfe von Schrauben vorgesehen.

Die zentrale Strebe 10 ist vorliegend nicht am Querträger 6 fixiert, sondern liegt lediglich an demselben an, d.h. sie dient ausschließlich der Übertragung von Druckkräften, während die seitlichen Streben 10 sowohl Druck- als auch Zugkräfte übertragen können. Alternativ kann die zentrale Strebe 10 auch fest am Querträger 6 angebracht sein. Durch eine andere Ausgestaltung als in der Zeichnung dargestellt des oberen Endes der zentralen Strebe 10 kann auch die zentrale Strebe Zug- und Druckkräfte übertragen. In diesem Fall kann gegebenenfalls auf eine oder beide seitlichen Streben verzichtet werden. Alternativ können nur eine (vorzugsweise die Strebe auf der Seite der Lenkung) oder beide seitlichen Streben vorgesehen sein, und auf die zentrale Strebe verzichtet werden. Sind mehrere Streben vorgesehen, so kann deren Querschnitt entsprechend verringert werden.

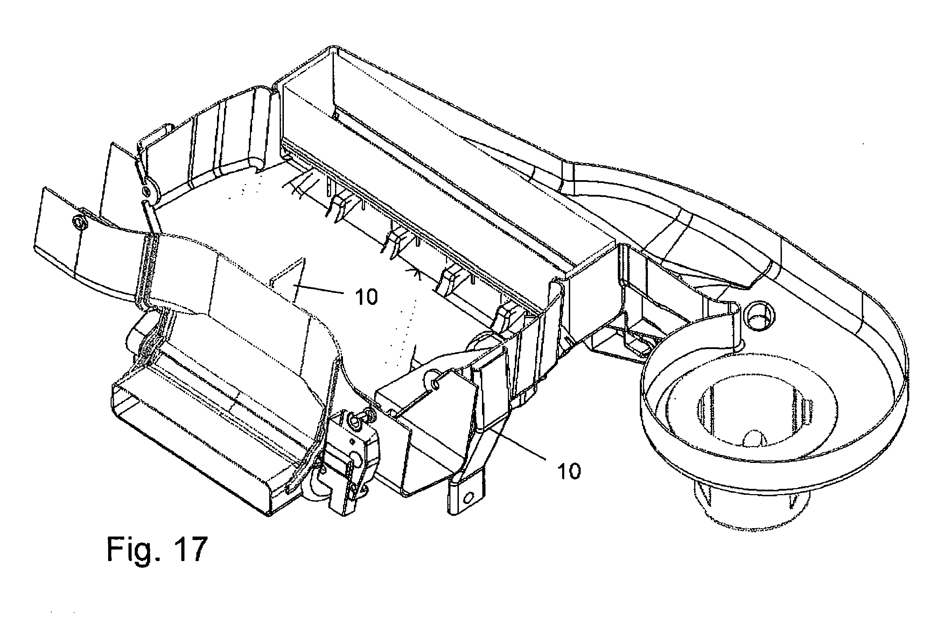

Die zentrale Strebe 10 verläuft, wie beispielsweise aus Fig. 17 ersichtlich, in der Fahrzeugmittellängsebene in Luftströmungsrichtung durch die Klimaanlage gesehen hinter dem Heizkörper 4. Auch die seitlichen Streben 10 sind im Wesentlichen einer Ebene angeordnet, welche sich durch die Anbindungsstellen der zentralen Strebe 10 und senkrecht zur Fahrzeugmittellängsebene erstreckt, so dass alle drei Streben 10 diese Ebene zumindest schneiden.

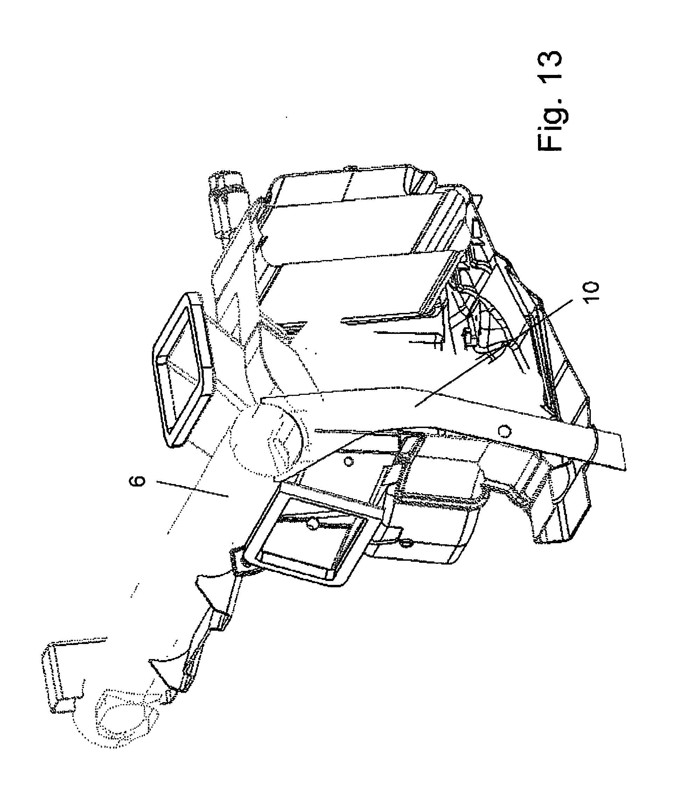

Die zentrale Strebe 10 weist eine leicht gekrümmte oder abgewinkelte Gestalt auf (siehe Fig. 13), wobei sie zuerst schräg nach unten in Richtung normaler Fahrtrichtung ausgerichtet und anschließend nach hinten unten verlaufend ausgebildet ist, so dass die beiden Anbindungsstellen 11 etwa übereinander angeordnet sind. Im Unterschied hierzu verlaufen die äußeren Streben 10 im Wesentlichen gerade nach unten, wobei sie jeweils entsprechend der Außenkontur des Gehäuses im oberen Bereich leicht nach außen verlaufen, bevor sie gerade nach unten und anschließend nach innen verlaufend gebogen sind (siehe Fig. 20).

Obwohl vorstehend nicht näher in Form eines Ausführungsbeispiels beschrieben, müssen seitliche Streben nicht notwendigerweise paarweise auftreten. Bauraumbedingt und/oder Belastungsbedingt kann auch eine nur auf einer Seite des Gehäuses verlaufende Strebe vorgesehen sein, beispielsweise in Verbindung mit einer zentralen Strebe, oder es kann auf einer Seite eine Strebe vorgesehen sein, die mit zwei auf der anderen Seite verlaufenden, nicht parallel zur einzelnen Strebe angeordneten Streben kombiniert ist.

Gemäß den vorstehenden Ausführungsbeispielen sind ausschließlich Stahlstreben beschrieben, welche vorzugsweise mit einem Rostschutz versehen sind. Alternativ sind beliebige andere, eine ausreichende Festigkeit und Belastbarkeit aufweisende Materialien möglich, wie beispielsweise Aluminium, Aluminiumlegierungen, glasfaserverstärkte Kunststoffe, Hybridbauteile, Sandwich- und Verbundwerkstoffe.

Die Strebe kann vom Material des umgebenden Gehäusebereichs ganz oder teilweise umspritzt sein, so dass das Gehäuse und die Strebe nicht lösbar, d.h. einstückig ausgebildet sind. Alternativ kann die Strebe auch auf beliebige andere Weise am Gehäuse angebracht sein, beispielsweise mittels Kleben, Schrauben, Klemmen.

Alternativ zu den beschriebenen, eingeführten oder umspritzten Streben kann eine entsprechende stützende Funktion auch direkt durch die Gehäusewand erfolgen, wobei versteift ausgebildete Wandbereiche vorgesehen sind, beispielsweise mittels Glasfaserverstärkungen oder anderen Einlagen. Diese versteift ausgebildeten Wandbereiche sind vorzugsweise in Richtung der Anbindungsstellen überstehend ausgebildet, d.h. es sind entsprechende Fortsätze vorhanden, mit deren Hilfe das Gehäuse am Querträger und auf der gegenüberliegenden Seite am Fahrzeugboden oder in einem anderen Bereich, an dem sich der Querträger abstützen soll, befestigbar ist.

Vorstehend wird stets von einer mittigen Anordnung des KlimaanlagenGehäuses bezüglich der Fahrzeugmittellängsebene ausgegangen. Ist die Klimaanlage jedoch seitlich versetzt angeordnet, so ist eine gegebenenfalls vorgesehene, zentralen Strebe außermittig bezüglich der Fahrzeugmittellängsebene angeordnet. Ferner sind in diesem Fall asymmetrische Ausgestaltungen in Folge der ungleichmäßigeren Kräfteverteilung sinnvoll.

Gemäß einem weiteren, nicht in der Zeichnung dargestellten Ausführungsbeispiel verlaufen Streben im Bereich der Seitenwände des Klimaanlagengehäuses, wobei die Streben mit ihrem einen Ende am oberen Bereich der Stirnwand, gebildet durch einen Querträger unter dem Windlauf, und mit ihrem anderen Ende im Bereich des Tunnels am Fahrzeugboden angebracht sind. Auf die Anbindung am Cockpit-Querträger, wie in den vorigen Ausführungsbeispielen beschrieben, kann verzichtet werden.

Alternativ ist auch eine Kombination möglich, so dass sich gegebenenfalls auch eine X-förmige Strebenanordnung (Stirnwand oben - Mitteltunnel, Cockpit-Querträger - Stirnwand unten im Bereich, insbesondere Übergang Getriebetunnel zur Stirnwand) ergeben kann. Im Bereich der Stirnwand können sowohl unten als auch oben Querträger vorgesehen sein, an denen die Anbindung erfolgt. Bei entsprechend stabiler Ausgestaltung der Stirnwand kann auch dieselbe direkt die Trägerfunktion erfüllen. Eine derartige X-förmige Ausgestaltung kann insbesondere bei einem symmetrisch in der Fahrzeugmittelebene angeordneten Gebläse vorteilhaft sein.

## Patentansprüche

1. Gehäuse, insbesondere für eine Kraftfahrzeug-Klimaanlage (1), mit mindestens einer Anbindungsmöglichkeit für eine Anbindung des Gehäuses an mindestens einen Querträger (6), **dadurch gekennzeichnet, dass** mindestens eine mit dem Querträger (6) verbindbare Strebe (10) vorgesehen ist, die durch einen versteift ausgebildeten Wandbereich des Gehäuses gebildet ist, und/oder in einem Wandbereich des Gehäuses oder direkt benachbart eines Wandbereichs des Gehäuses verlaufend und an demselben fixiert angeordnet ist.

2. Gehäuse nach Anspruch 1, **dadurch gekennzeichnet, dass** die Strebe (10) mit ihrem einen Ende am Querträger (6) anbringbar und mit ihrem anderen Ende an einem zweiten Querträger, dem Fahrzeugboden oder dem Fahrzeugtunnel verbindbar ist, oder dass der versteift ausgebildete Wandbereich des Gehäuses mit einem Bereich am Querträger (6) anbringbar und mit einem anderen, gegenüberliegenden Bereich an einem zweiten Querträger, dem Fahrzeugboden oder dem Fahrzeugtunnel verbindbar ist.

3. Gehäuse nach Anspruch 1 oder 2, **dadurch gekennzeichnet, dass** die Strebe (10) oder der als Strebe ausgebildete, versteifte ausgebildete Wandbereich durch eine Mittelwand des Gehäuses verläuft und/oder direkt durch die Mittelwand des Gehäuses gebildet ist.

4. Gehäuse nach Anspruch 1 oder 2, **dadurch gekennzeichnet, dass** der versteift ausgebildete Wandbereich durch eine Außenwandwand des Gehäuses gebildet ist oder eine Strebe (10) entlang einer Außenwand des Gehäuses verläuft und/oder in eine Außenwandwand des Gehäuses integriert ist.

5. Gehäuse nach einem der vorhergehenden Ansprüche, **dadurch gekennzeichnet, dass** der versteift ausgebildete Wandbereich einen mehrschichtigen Aufbau über zumindest einen Teil seines Querschnitts aufweist, wobei der Querschnitt gegenüber benachbarten, nicht versteift ausgebildeten Wandbereichen des Gehäuses vergrößert ist.

6. Gehäuse nach einem der vorhergehenden Ansprüche, **dadurch gekennzeichnet, dass** der versteift ausgebildete Wandbereich einen Querschnitt quer zur Kraftflussrichtung von 50 bis 150 mm², insbesondere von 100 mm² +/- 20 mm², aufweist.

7. Gehäuse nach einem der vorhergehenden Ansprüche, **dadurch gekennzeichnet, dass** die Materialdicke im versteift ausgebildeten Wandbereich 1 bis 5 mm beträgt.

8. Gehäuse nach einem der vorhergehenden Ansprüche, **dadurch gekennzeichnet, dass** der versteift ausgebildete Wandbereich oder die Strebe (10) in Luftströmungsrichtung der die Klimaanlage (1) durchströmenden Luft nach dem Heizkörper (4) angeordnet ist.

9. Gehäuse nach einem der vorhergehenden Ansprüche, **dadurch gekennzeichnet, dass** der versteift ausgebildete Wandbereich oder die Strebe(10) in Luftströmungsrichtung der die Klimaanlage (1) durchströmenden Luft nach dem Verdampfer (3) und vor dem Heizkörper (4) angeordnet ist.

10. Gehäuse nach einem der vorhergehenden Ansprüche, **dadurch gekennzeichnet, dass** mindestens eine Strebe (10) oder ein versteift ausgebildeter Wandbereich des Gehäuses vom Bereich Tunnel zum Bereich Stirnwand, Stimwandquerträger (oben) führt.

11. Anordnung, aufweisend mindestens einen Querträger (6) und ein Gehäuse, insbesondere für eine Kraftfahrzeug-Klimaanlage (1), wobei das Gehäuse am Querträger (6) fest angebracht ist, **gekennzeichnet durch** eine Ausgestaltung des Gehäuses nach einem der Ansprüche 1 bis 10.

12. Anordnung nach Anspruch 11, **dadurch gekennzeichnet, dass** die seitlichen Streben und/oder versteift ausgebildete Wandbereiche X-förmig verlaufend angeordnet sind.

13. Anordnung nach Anspruch 11 oder 12, **dadurch gekennzeichnet, dass** wenigstens ein Ende einer Strebe (10) oder eines versteift ausgebildeten Wandbereichs des Gehäuses am Cockpit-Querträger (6), an einem Stirnwand-Querträger oder am Boden fest angebracht ist.
